# EUROPÄISCHE PATENTANMELDUNG

(11) **EP 1 626 061 A1**
(43) Veröffentlichungstag der Anmeldung: **15.02.2006**
(21) Anmeldenummer: 05106645.4
(22) Anmeldetag: 20.07.2005
(51) Int. Cl.: C08J 3/12, C08G 18/08, C08G 18/28, C08G 18/32, C08G 18/12, C10M 119/24

(54) **Verfahren zur Herstellung pulverförmiger (Poly)harnstoffe**

(30) Priorität: 11.08.2004 DE 102004039156; 14.09.2004 DE 102004044876
(71) Anmelder: Rhein Chemie Rheinau GmbH, 68219 Mannheim (DE)
(72) Erfinder: Laufer, Wilhelm, Dr., 68165 Mannheim (DE); Wuehr, Michael, 69493 Hirschberg (DE); Allgöwer, Klaus, 67071 Ludwigshafen (DE); Galda, Patrick, Dr., 76149 Karlsruhe (DE)
(74) Vertreter: Gille Hrabal Struck Neidlein Prop Roos

(57) **Zusammenfassung**

Die vorliegende Erfindung betrifft ein Verfahren zur Herstellung von (Poly)harnstoffpulvern.

## Beschreibung

Die vorliegende Erfindung betrifft ein Verfahren zur Herstellung von (Poly)harnstoffpulvern und Zusammensetzungen, die die nach dem Verfahren erhaltenen (Poly)harnstoffpulver enthalten sowie die Verwendung der nach dem Verfahren erhaltenen Polyharnstoffpartikel als Verdickungsmittel, insbesondere in Schmierstoffen, wie sogenannten Polyharnstofffetten.

Sogenannte Polyharnstofffette, die Polyharnstoffe als Verdickungsmittel in Basisölen enthalten, werden nach dem Stand der Technik nach wie vor fast ausschließlich nach dem sogenannten "in-situ"-Verfahren hergestellt. Bei dem "in-situ"-Verfahren wird der Polyharnstoff-Verdicker "in-situ" durch Polyaddition von in Solvent oder Mineralöl gelöstem Polyisocyanat und ebenfalls in Mineralöl oder Solvent gelösten Polyaminen erzeugt. Der hierbei entstehende Polyharnstoff liegt in verteilter, vorgequollener Form vor und bildet nach Abzug des Lösemittels in dem Basisöl (Mineralöl) eine gollertartige, strukturierte Paste, die nach weiterer Homogenisierung ein homogenes Fett bildet. Dieses Verfahren weist den Nachteil auf, dass das erhaltene Produkt Verunreinigungen aufgrund der Reaktion enthält, Besonders kritisch ist hier das TDI. Für die Durchführung des "in-situ"-Verfahrens sind somit besondere Genehmigungsverfahren erforderlich, Weitere Nachteile sind, dass die Steuerung der Reaktion aufgrund der hohen Viskositäten beim "in-situ"-Verfahren problematisch ist. Es kann zu Inhomogenitäten innerhalb der Reaktionsmassen kommen. Weiterhin kann es zu Problemen bei der Temperaturabführung kommen, da die Polyadditionsreaktion exotherm verläuft. Dieser sogenannte "in-situ"-Stand der Technik wird ausführlich in der EP 0534248 A1 referiert, auf die Bezug genommen wird.

Die Nachteile des vorstehend erwähnten Stands der Technik versucht das Verfahren der EP 0534248 A1 zu überkommen, bei dem zunächst die Polyaddition zum Polyharnstoff in einem Lösemittel (u.a. Toluol, Butanol, Essigester, Chloroform etc.) oder lösemittelfrei durch Extrusion durchgeführt wird. Der gewonnene Feststoff wird im weiteren nachbearbeitet, d.h. getrocknet (Abnutschen bzw. Abdampfen bzw. Abziehen des Lösemittels), danach gemahlen und schließlich zum Fett umgesetzt. Bei dem in der EP 0534248 A1 beschriebenen Verfahren werden zunächst Polyharnstoffe durch Umsetzung von Polyisocyanaten mit Aminen hergestellt, diese anschließend nach vollständigem Durchreagieren im trockenen Zustand zu Pulvern vermahlen und das gemahlene Rohprodukt nach Anteigen in einem Grundöl in einem Hochdruckhomogenisator unter Drücken von mehr als 500 bar zu einem "PU-Fett" verarbeitet. Der Nachteil dieses Verfahrens besteht darin, dass die durch das Vermahlen erhaltenen Pulver relativ grobkörnig sind. Dies führt zu Nachteilen bei der Einarbeitung der Polyharnstoffpulver in die Basisflüssigkeiten. In diesem Verfahren ist daher die Anwendung eines Hochdruckhomogenisators obligatorisch. Das Verfahren erfordert somit einen hohen Energieeinsatz. Weiterhin weist das Verfahren der EP 0534248 A1 den Nachteil auf, dass mehrere Reaktoren und mehrere Prozessschritte erforderlich ist. Die Lösungsmittelvariante der EP 0534248 A1 erfordert überdies sehr große Mengen von Lösungsmittel, die nach der Reaktion wieder abdestilliert werden müssen. Hohe Lösungsmittelmengen sind beispielsweise deshalb erforderlich, damit das entstehende Reaktionsprodukt auf eine Nutsche zur Trocknung transportiert werden kann. All dies führt zu einem höheren Energieaufwand sowie höheren Lösungsmittelrückführungskosten. Die lösungsmittelfreie Variante durch Extrusion weist den Nachteil auf, dass es zu Problemen der Wärmeabfuhr (insbesondere Vercracken) kommen kann. In beiden Varianten ist ein anschließendes Vermahlen des getrockneten Reaktionsproduktes erforderlich, was ebenfalls sehr aufwöndig ist.

Ähnlich erfordert das Verfahren der WO 02/04579 mit dem ein Polyharnstofffett mit Niedriggeräusch-Eigenschaften bereitgestellt werden soll, zunächst ein separates Verfahren der Herstellung des Polyharnstoffes und dann ein zusätzliches Scherverfahren mit dem die Partikelgröße der Verdickerpartikel bei der Einarbeitung in ein Basisöl auf weniger als 500 nm verringert werden kann. Bevorzugt werden die Partikelgrößen durch das Scherverfohren soweit verringert, dass alle Partikel weniger als 100 µm mit 95 % der Partikel mit weniger als 50 µm aufweisen. Die Herstellung noch feinteiligerer Polyharnstoffsuspensionen ist nach den dort beschriebenen Verfahren mit vertretbarem Energieeinsatz jedoch nicht möglich. Die WO 02/04579 beschreibt überdies keine feinteiligen getrockneten Polyhornstoffpulver, die beispielsweise beim Abnehmer vor Ort in Basisöle eingearbeitet werden können.

Weiterhin sind aus der WO 02/02683 Kautschuk-Zusammensetzungen bekannt, die einen feinteiligen Polyharnstofffüllstoff enthalten. Die dabei verwendeten Polyharnstofffüllstoffpartikel weisen eine lichtmikroskopisch bestimmte Teilchengröße von 0,001 bis 500 µm auf. Die Polyharnstoffpartikel werden jedoch nicht isoliert sondern bevorzugt in Gegenwart des Kautschuks hergestellt. Ein getrocknetes feinteiliges Polyharnstoffpulver, ein Verfahren zu seiner Herstellung sowie dessen Anwendung als Verdicker in sogenannten PU-Fetten wird nicht erwähnt.

Den vorliegenden Erfindern gelang es völlig überraschend besonders feinteilige (Poly)hornstoffpulver durch die Verwendung eines Verfahrens zur Herstellung von Polyharnstoff in einem Reaktor unter gleichzeitiger Scherbeanspruchung und Entfernung der flüchtigen Inhalte herzustellen. Das Verfahren erlaubt die Herstellung feinteiliger, trockener (Poly)harnstoffpulver in einem einzigen Reaktor ohne zusätzlichen Mahlschritt. Die erhaltenen (Poly)harnstoffpartikel sind ausreichend feinteilig und erlauben die Einarbeitung in Basisöle zur Herstellung von (Poly)harnstofffetten ohne erhöhten Energieaufwand.

Durch die Verwendung der feinteiligeren Partikel ist insbesondere bei der Einarbeitung in Basisöle zur Herstellung sogenannter PU-Fette die Anwendung niedrigerer Drücke bei der Homogenisierung möglich, was zu Energie- und MaterialEinsparungen führt.

Die vorliegende Erfindung betrifft somit ein Verfahren zur Herstellung eines (Poly)harnstoffpulvers, dadurch gekennzeichnet, dass man mindestens ein lsocyanat mit mindestens einem Amin in mindestens einem Lösungsmittel in einem Reaktor umsetzt und den entstandenen (Poly)hornstoff unter Scherbeanspruchung unter Bildung eines (Poly)harnstoffpulvers im genannten Reaktor trocknet. (Poly)harnstoff schließt erfindungsgemäß Monoharnstoff-Verbindungen und Polyharnstoff-Verbindungen ein. Monoharnstoff-Verbindungen sind solche, die eine Gruppe 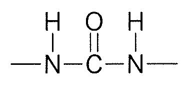 im Molekül aufweisen, wobei die freien Valenzen durch mindestens eine organische Gruppe abgesättigt sind, Harnstoff selbst also ausgenommen ist. Erfindungsgemäß bevorzugt sind jedoch die Polyharnstoff-Verbindungen, die mindestens zwei Gruppen 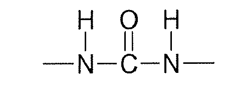 im Molekül aufweisen,

Die vorliegende Erfindung betrifft bevorzugt ein Verfahren zur Herstellung eines Polyharnstoffpulvers, dadurch gekennzeichnet, dass man mindestens ein Polyisocyanat mit mindestens einem Polyamin sowie gegebenenfalls mit mindestens einem Monoamin umsetzt und den entstandenen Polyharnstoff unter Scherbeanspruchung unter Bildung eines Polyharnstoffpulvers im genannten Reaktor trocknet.

Bevorzugt beträgt das Gewichtsverhältnis des Gesamtgewichts von Polyisocyanat und Mono- bzw. Polyamin zum Gesamtgewicht der Lösungsmittel von 10% bis 50% . Besonders bevorzugt beträgt das Verhältnis von 15% bis 35% . Ein Verhältnis von größer als 50% ist nachteilig, weil die Eindickung der Suspension während der Umsetzung die Diffusion und Reaktion der Reaktionspartner zunehmend behindert. Ein Verhältnis von kleiner als 10% ist nachteilig, weil die Ausbeute unwirtschaftlich ist.

Das Lösungsmittel, dass in der erfindungsgemäß eingesetzten Suspension verwendet wird, wird bevorzugt aus organischen Lösungsmitteln ausgewählt. Besonders bevorzugt wird das Lösungsmittel aus organischen Lösungsmitteln ausgewählt wird, die ausgewählt werden aus der Gruppe, die besteht aus gegebenenfalls substituierten geradkettigen, verzweigten, cyclischen aliphatischen oder aromatischen Kohlenwasserstoffen, wie Butan, Pentan, n-Hexan, Cyclohexan, n-Octan, Isooctan, Petrolether, Benzol, Toluol, Xylol, halogenierten Kohlenwasserstoffen, wie Methylenchlorid, Chlorbenzol, Ethern, wie Diethylether, Tetrahydrofuran, Ketonen, wie Aceton, estern wie Ethylacetat, Butylacetat etc.

Besonders bevorzugte Lösungsmittel sind n-Hexan, n-Heptan, Petrolether, Ethylacetat.

Für Lebensmittelanwendungen besonders bevorzugte Lösemittel sind die im US Gesetz "Code of Federal Regulations" CFR 21 §§ 170 - 199 dargelegten Lösemittel, wie z.B. isoparaffinische Petrolether gemäß § 173.280, Hexan gemäß § 173.270, Aceton gemäß § 173.210, Ethylacetat gemäß § 173.228, 1,3-Butylglykol gemäß § 172.712.

Es ist auch möglich, Mischungen eines oder mehrerer Lösungsmittel zu verwenden.

Die Herstellung des Polyharnstoffs kann in an sich bekannter Weise durch die Umsetzung mindestens eines Polyisocyanates mit mindestens einem Polyamin in einem geeigneten Lösungsmittel erfolgen.

Die Herstellung der Polyharnstoffe erfolgt zweckmäßig durch Umsetzung mindestens eines Polyisocyanats mit mindestens einem Mono- bzw. Polyamin bei Temperaturen von -100 bis 250°C, bevorzugt 20 bis 80°C, in einem Lösungsmittel, wie den oben genannten, unter Ausfällung des Polyharnstoffs.

Die erhaltenen Polyharnstoff besitzen bevorzugt Schmelz- bzw. Zersetzungspunkte von ≥ 180°C, bevorzugt ≥ 200°C, besonders bevorzugt ≥ 240°C. Ihre Glastemperaturen liegen, sofern vorhanden, oberhalb von 50°C, bevorzugt oberhalb von 100°C.

Geeignete Polyisocyanate zur Herstellung der Polyharnstoffe sind z.B. Hexamethylendiisocyanat (HDI), Toluoldiisocyanat (TDI), 2,2'-, 2,4'- und 4,4'-Diisocyanatodiphenylmethan (MDI), Polymethylenpolyphenylisocyanat (PMDI), Naphthalindiisocyanat (NDI), 1,6-Diisocyanato-2,2,4-trimethylhexan, Isophorondiisocyanat (3-(Isocyanato-methyl)-3,5,5-trimethylcyclohexylisocyanat, IPDI), Tris(4-isocyanato-phenyl)-methan, Phosphorsäure-tris-(4-isocyanatophenylester), Thiophosphorsäure-tris-(4-isocyanato-phenylester) sowie Oligomerisierungsprodukte, die durch Reaktion der genannten niedermolekularen Diisocyanate mit Diolen oder Polyalkoholen, insbesondere Ethylenglykol, 1,4-Butandiol, 1,6-Hexandiol, Trimethylolpropan, Pentaerythrit erhalten wurden und einen Restgehalt an freien Isocyanatgruppen besitzen. Ferner Oligomerisierungsprodukte, die durch Reaktion der genannten niedermolekularen Diisocyanate mit hydroxygruppenhaltigen Polyestern, wie z.B. Polyestern auf Basis Adipinsäure und Butandiol und Hexandiol mit Molgewichten von 400 bis 3.000, oder durch Reaktion mit hydroxygruppenhaltigen Polyethern, wie Polyethylengykolen, Polypropylenglykolen, Polytetrahydrofuronen mit Molgewichten von 150 bis 3.000, erhalten wurden und einen Restgehalt an freien Isocyanatgruppen besitzen können, ferner Oligomerisierungsprodukte, die durch Reaktion der genannten niedermolekularen Diisocyanate mit Wasser oder durch Dimerisierung oder Trimerisierung, wie z.B. dimerisiertes Toluoldiisocyanat (Desmodur TT) und trimerisiertes Toluoldiisocyanat, Isocyanatgruppen-haltige aliphatische Polyuretdione, z.B. auf Isophorondiisocyanatbasis erhalten wurden und einen Restgehalt an freien Isocyanatgruppen besitzen. Bevorzugte Gehalte an freien Isocyanatgruppen der Polyisoyanate liegen bei 2,5 bis 50 Gew.-%, bevorzugt 10 bis 50 Gew.-%, besonders bevorzugt bei 15 bis 50 Gew.-%. Derartige Polyisocyanate sind bekannt und im Handel erhältlich, Siehe hierzu Houben-Weyl, Methoden der Organischen Chemie, Band XIV, Seiten 56-98, Georg Thieme Verlag Stuttgart 1963, Encyclopedia of Chem. Technol., John Wiley 1984, Vol 13, Seiten 789-818, Ullmann's Encyclopedia of Industrial chemistry, VCH, Weinheim, 1989, Vol. A 14, Seiten 61 1-625, sowie die Handelsprodukte der Desmodur- und Crelan-Reihe (Bayer AG).

Geeignete Polyisocyanate sind auch blockierte Polyisocyanate, die unter den genannten Reaktionsbedingungen mit den Polyaminen reagieren können. Hierunter fallen alle bereits genannten Polyisocyanate, wobei die Isocyanatgruppen jeweils mit geeigneten Abspaltungsgruppen blockiert sind, die bei höherer Temperatur wieder abspalten und die Isocyanatgruppen freisetzen. Geeignete Abspaltungsgruppen sind insbesondere Caprolactam, Malonsäureester, Phenol und Alkylphenole, wie z.B. Nonylphenol sowie Imidazol und Natriumhydrogensulfit. Besonders bevorzugt sind Caprolactam-, Malonester und Alkylphenol-blockierte Polyisocyanate, insbesondere auf Basis Toluoldiisocyanat oder trimerisiertem Toluoldiisocyanat. Bevorzugte Gehalte an blockierten Isocyanatgruppen liegen bei 2,5 bis 30 %. Derartige blockierte Polyisocyanate sind bekannt und im Handel erhältlich. Siehe hierzu Houben-Weyl, Methoden der Organischen Chemie, Band XIV, Seiten 56-98, Georg Thieme Verlag Stuttgart 1963, sowie die Handelsprodukte der Desmodur-und Crelan-Reihe (Bayer AG).

Bevorzugte Polyisocyanate sind Hexamethylendiisocyanat (HDI), Toluoldiisocyanat (TDI), 2,4'- und 4,4'-Diisocyanatodiphenylmethan (MDI), Polymethylenpolyphenylisocyanat (PMDI), 1,6-Diisocyanato-2,2,4-trimethylhexan, Isophorondiisocyanat (IPDI), und Oligomerisierungsprodukte, die durch Reaktion der genannten niedermolekularen Diisocyanate mit Wasser oder mit Diolen oder Polyalkoholen, insbesondere Ethylenglykol, 1,4-Butandiol, 1,6-Hexandiol, Trimethylolpropan sowie Penterythrit, erhalten wurden und einen Restgehalt an freien Isocyanatgruppen besitzen, sowie Oligomerisierungsprodukte, die durch Dimerisierung oder Trimerisierung, wie dimerisiertes Toluoldiisocyanat (Desmodur TT) und trimerisiertes Toluoldiisocyanat, Isocyanatgruppen-haltige aliphatische Polyuretdione, z.B, auf Isophorondiisocyanatbasis, erhalten wurden und einen Gehalt an freien Isocyanatgruppen von 2,5 bis 50 Gew.-%, bevorzugt 10 bis 50 Gew.-%, besonders bevorzugt 15 bis 35 Gew.-%, besitzen. Ganz besonders bevorzugt werden 2,4'- und 4,4'-Diisocyanatodiphenylmethan (MDI) Hexamethylendiisocyanat (HDI), Toluoldiisocyanat (TDI) und Polyrnethylenpolyphenylisocyanat (PMDI).

Geeignete Polyamine sind aliphatische Di- und Polyamine, wie Hydrazin, Ethylendiamin, 1,2-Propylendiamin, 1,3-Propylendiamin, 1-Amino-3-methylaminopropan, 1,4-Diaminobutan, N,N'-dimeth-1-ethylendiamin, 1,6-Diaminohexan, 1,12-Diaminododecan, 2,5-Diamino-2,5-dimethylhexan, Trimethyl-1,6-hexan-diamin, Diethylentriamin, N,N',N"-Trimethyldiethylentriamin, Triethylentetramin, Tetraethylenpentamin,Pentaethylenhexamin, Polyethylenimin mit Molgewichten zwischen 250 und 10000, Dipropylentriamin, Tripropylentetramin, Bis-(3-aminopropyl)amin, Bis-(3-aminopropyl)-methylamin, Piperazin, 1,4-Diaminocyclohexan, Isophorondiamin, N-Cyclohexyl- 1,3-propandiamin, Bis-(4-amino-cyclohexyl)methan, Bis-(4-amino-3-methyl-cyclohexyl)-methan Bisaminomethyltricyclodecan (TCD-Diamin), o-, m- und p-Phenylendiamin, 1,2-Diamino-3-methylbenzol, 1,3-Diamino-4-methylbenzol (2,4-Diaminotoluol), 1,3-Bisaminomethyl-4,6-dimethylbenzol, 2,4- und 2,6-Diamino-3,5-diethyltoluol, 1,4- und 1,6-Diaminonaphthalin, 1,8- und 2,7 Diaminonaphthalin, Bis-(4-amino-phenyl)-methan, Polymethylenpolyphenylamin, 2,2-Bis-(4-aminophenyl)-propan, 4,4'-Oxibisanilin, 1,4-Butandiol-bis-(3-aminopropylether), hydroxylgruppenhaltige Polyamine, wie 2-(2-Aminoethylamino)ethanol, carboxylgruppenhaltige Polyamine, wie 2,6-Diamino-hexansäure. Ferner aminogruppenhaltige flüssige Polybutadiene oder Acrylnitril/Butadien-Copolymere mit mittleren Molgewichten bevorzugt zwischen 500 und 10.000 und aminogruppenhaltige Polyether z.B, auf Basis von Polyethylenoxid, Polypropylenoxid oder Polytetrahydrofuran mit einem Gehalt an primären oder sekundären Aminogruppen von 0,25 bis ca, 8 mmol/g, bevorzugt 1 bis 8 mmol/g. Derartige aminogruppenhaltige Polyether sind im Handel erhältlich (z.B Jeffamin D-400, D-2000, DU-700, ED-600, T-403 und T-3000 der Texaco Chem. Co.).

Besonders bevorzugte Polyamine sind Hydrazin, Ethylendiamin, 1,2-Propylendiamin, 1,3-Propylendiamin, 1-Amino-3-methylaminopropan, 1,4-Diaminobutan, N,N'-Dimethyl-ethylendiamin, 1,6-Diaminohexan, Diethylentriamin, N,N',N"-Trimethyldiethylentriamin, Triethylentetramin, Tetraethylenpentamin, Pentaethylenhexamin, Polyethylenimin mit Molgewichten zwischen 250 und 10.000, Dipropylentriamin, Tripropylentetramin, Isophorondiamin, 2,4-Diaminotoluol und 2,6-Diaminotoluol, Bis-(4-amino-phenyl)-methan, Polymethylen-polyphenylamin sowie aminogruppenhaltige flüssige Polybutadiene oder Acrylnitril/Butadien-Copolymere mit mittleren Molgewichten bevorzugt zwischen 500 und 10.000, aminogruppenhaltige Polyether z.B. auf Basis von Polyethylenoxid, Polypropylenoxid mit einem Gehalt an primären oder sekundären Aminogruppen von 1 bis 8 mmol/g.

Ganz besonders bevorzugte Polyamine sind Ethylendiamin, 1,2-Propylendiamin, 1,3-Propylendiamin, Diethylentriamin, Triethylentetramin, Tetraethylenpentamin, Pentaethylenhexamin, Polyethylenimin mit Molgewichten zwischen 250 und 10.000, 2,4-Diaminotoluol und 2,6-Diaminotoluol, Bis-(4-amino-phenyl)-methan sowie Polymethylenpolyphenylamin sowie aminogruppenhaltige Polyether, z.B. auf Basis von Polyethylenoxid, Polypropylenoxid, mit einem Gehalt an primären oder sekundären Aminogruppen von 1 bis 8 mmol/g und Molgewichten zwischen 250 und 2000.

Zusätzlich zu den Polyaminen können noch weitere gegenüber den Polyisocyanaten reaktive Verbindungen zugesetzt werden, insbesondere Kettenabbruchsmittel, wie Monoamine, wie Ammoniak, C1i bis C18-Alkylamine und Di-(C1 bis C18-Alkyl)-amine, sowie Arylamine, wie Anilin, C1-C12-Alkylarylamine, und aliphatische, cycloaliphatische oder aromatische Mono-, Di- oder Poly-C1- bis C18-Alkohole, aliphatische, cycloaliphatische oder aromatische Mono-, Di- oder C1 bis C18-Carbonsäuren, Aminosilane, wie 3-Aminopropyltrimethoxysilan und 3-Aminopropyltriethoxysilan, sowie carboxyl-, epoxy- oder hydroxyl-gruppenhaltige flüssige Polybutadiene oder Acrylnitril/Butadien-Copolymere mit mittleren Molgewichten bevorzugt zwischen 500 und 10.000 und Polyether und Polyester mit Molgewichten zwischen 200 bis 10.000, die gegenüber den Polyisocyanaten reaktive Hydroxyl- und/oder Carboxylgruppen besitzen, eingesetzt werden. Beispiel für diese zusätzlich zu verwendenden Monomamine sind Ammoniak, Methylamin, Dimethylamin, Dodecylamin, Octadecylamin, Oleylamin, Stearylamin, Ethanolamin, Diethanolamin, beta-Alanin oder Aminocapronsäure. Die Menge dieser zusätzlichen Amine, Alkohole, Carbonsäuren, hydroxyl- undoder corboxylgruppenhaltiger Polyether und Polyester hängt von deren Gehalt an gegenüber den Polyisocyanaten reaktiven Gruppen ab und liegt bei 0 bis 0,5 mol reaktive Gruppe pro Isocyanat-Äquivalent.

Die erfindungsgemäßen Polyharnstoffpartikel können - wie erwähnt - durch Umsetzung von mindestens einem Polyisocyanat mit mindestens einem Mono- bzw. Polyamin bei Temperaturen von -100 bis 250°C, bevorzugt 20 bis 80°C, in einem Lösungsmittel unter Ausfällung des Polyharnstoffs hergestellt werden. Bevorzugte Lösungsmittel sind insbesondere organische, vorzugsweise aprotische mit Isocyanaten nicht reaktive, Lösungsmittel, insbesondere gegebenenfalls substituierte geradkettige, verzweigte, cyclische aliphatische oder aromatische Kohlenwasserstoffe, wie Butan, Pentan, n-Hexan, Petrolether, Cyclohexan, n-Octan, Isooctan, Benzol, Toluol, Xylol, halogenierte Kohlenwasserstoffen, wie Methylenchlorid, Chlorbenzol, Ether, wie Diethylether, Tetrahydrofuran, Ketone, wie Aceton, Ester wie Ethylacetat, Butylacetat etc.

Für Lebensmittelanwendungen besonders bevorzugte Lösemittel sind, wie oben bereits erwähnt: isoparaffinische Petrolether, Hexan, Aceton, Ethylacetat und 1,3-Butylglykol.

Die Monoharnstoff-Verbindungen werden entsprechend den Polyharnstoff-Verbindungen insbesondere durch Umsetzung monofunktioneller Isocyanate mit monofunktionellen Aminen hergestellt. Es handelt sich dabei zweckmäßig um solche Verbindungen, die eine verdickende Wirkung auf die Basisöle ähnlich den Polyharnstoffen aufweisen.

Im Gegensatz zum oben beschriebenen sogenannten "in-situ"-Stand der Technik erfolgt die Herstellung der (Poly)hornstoffportikel erfindungsgemäß nicht in dem sogenannten Grund- oder Basisöl des Schmiermittels, wie es unten beschrieben. Die Lösungsmittel die zur Herstellung der Polyharnstoffe verwendet werden und die in den der Sprühtrocknung unterworfenen Suspensionen vorliegen, unterscheiden sich von den sogenannten Basisölen insbesondere durch ihre Viskosität und ihr Molekulargewicht. Die Viskosität der Lösungsmittel liegt bei etwa bis zu 1 cSt (40 °C), während sie bei den Basisölen mindestens bei etwa 4 bevorzugt mindestens etwa 5 cSt (40 °C) liegt. Basisöle weisen eine Molekulargewichtsverteilung auf, die sich herstellungsbedingt aus der Raffination/Destillation ergibt. Demgegenüber besitzen Lösemittel ein definiertes Molekulargewicht.

Die Umsetzung von Polyisocyanat mit Mono- bzw. Polyamin wird bevorzugt so durchgeführt, dass man das Polyisocyanat in dem Lösungsmittel vorlegt und anschließend Polyamin hinzumischt, oder indem man das Mono- bzw. Polyamin in dem Lösungsmittel vorlegt und das Polyisocyanat hinzumischt. Die Mengen an Polyisocyanat, Mono- bzw. Polyamin richten sich nach den gewünschten Eigenschaften der Polyharnstoffpartikel. Durch Einsatz eines Überschusses an Mono- bzw. Polyamin enthalten diese beispielsweise noch gebundene Aminogruppen, oder bei Einsatz eines Überschusses von Polyisocyanat noch gebundene Isocyanatgruppen enthält.

Bevorzugte Mengen-Verhältnisse von Polyisocyanat und Polyamin liegen bei 0,5 bis 2,0, bevorzugter bei 0,7 bis 1,3, insbesondere 0,8 bis 1,2 Mol Isocyanatgruppe pro Mol Aminogruppe.

Werden Monoamine, wie Stearylamin als Kettenstopper verwendet, kann dies die Verhältnisse von Polyamin zu Polyisocyanat entsprechend beeinflussen.

Neben Mono- bzw. Polyaminen können erfindungsgemäß weitere gegenüber Isocyanaten reaktive polyfunktionelle Verbindungen verwendet werden, wie zum Beispiel insbesondere Polyole, sodass es zur Bildung von Polyharnstoffurethanen kommt. Solche Polyole können auch Polyethergruppen aufweisen. Bei den Polyolen kann es sich beispielsweise um die oben erwähnten zur Herstellung von oligomeren Polyisoyanaten eingesetzten Polylalkohole handeln.

Zur Steuerung der Polyharnstoff-Teilchengröße können wie oben bereits erwähnt, vor oder während des Herstellungsprozesses Emulgatoren und Dispergiermittel zugegeben werden.

Erfindungsgemäß handelt es sich bei den Polyharnstoffen um solche, die mindestens zwei Harnstoffwiederholungseinheiten der Formel 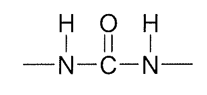 aufweisen. Besonders bevorzugt sind erfindungsgemäß Polyharnstoffe, die im Mittel zwei, drei oder vier solcher Harnstoffgruppen aufweisen.

Bevorzugt bestehen die Polyharnstoffpartikel aus Polyharnstoff mit einer massenmittleren Molekülmasse bestimmt durch Gelpermeationschromatographie gegen Polystyrol als Standard, von 500 bis 20.000.

Besonders bevorzugte Polyharnstoffe sind Umsetzungsprodukte aus 2,4'- und 4,4'-Diisocyanatodiphenylmethan (MDI), Hexamethylendiisocyanat (HDI), Toluoldiisocyanat (TDI) und Polymethylenpolyphenylisocyanat (PMDI) und Ethylendiamin, 1,2-Propylendiamin, 1,3-Propylendiamin, 2,4- 1,6-Diaminohexan, Diaminotoluol und 2,6-Diaminotoluol, Bis-(4-amino-phenyl)-methan sowie Polymethylenpolyphenylamin und/oder Monoamine, wie Ammoniak, C1 bis C18-Alkylamine und Di-(C1 bis C18-Alkyl)-amine, sowie Arylamine, wie Anilin, C1-C12-Alkylarylamine, sowie Polyharnstoffe mit Molgewichten von 500 bis 3000.

Nach dem die Umsetzung zum (Poly)harnstoff abgeschlossen ist, erfolgt die Trocknung des (Poly)harnstoffpulvers durch Abziehen des Lösungsmittels und der übrigen gegebenenfalls vorhandenen flüchtigen Bestandteile aus dem Reaktionsrecktor. Das Trocknen erfolgt bevorzugt bei einer Temperatur im Bereich von 40 bis 80 C°. In einer bevorzugten Variante erfolgt das Trocknen unter verminderten Druck von bevorzugt weniger als 300 mbar. Besonders bevorzugt erfolgt das Trocknen bei einem Druck im Bereich von 10 bis 180 mbar.

Das erfindungsgemäße Verfahren ist dadurch gekennzeichnet, dass mindestens der Trocknungsschritt unter Scherbeanspruchung durchgeführt wird. Scherbeanspruchung bedeutet, dass auf die (Poly)harnstoffpartikel im Reaktor Scherkräfte ausgeübt werden. Bevorzugt wird die Scherbeanspruchung auch bereit während der Reaktion des Polyisocyanates mit dem Polyamin angewendet, wodurch die Bildung größerer Partikel bzw. Agglomerate von vorn herein vermieden wird.

Die Scherbeanspruchung, die im Reaktor ausgeübt wird, beträgt bevorzugt von 1 bis 10⁴ s⁻¹.

Die Scheranspruchung während der Trocknung bzw. gegebenenfalls auch während der Umsetzung wird zweckmäßig so gewählt, das die unten angegebenen Partikelgrößenbereiche für das erhaltene (Poly)harnstoffpulver erreicht werden.

Geeignete Reaktoren, in denen die Herstellung und Trocknung der (Poly)hornstoffpulver unter Scherbeanspruchung erfolgen kann, schließen bevorzugt horizontale Einwellenmischer ein.

Die nach dem erfindungsgemäßen Verfahren erhaltenen trockenen Polyharnstoffpulver weisen bevorzugt einen Restgehalt an flüchtigen Bestandteilen (solche, die einen Siedepunkt von weniger als 250° C aufweisen), von weniger als 5 Gew.-%, bevorzugter weniger als 3 Gew.-%, noch bevorzugter weniger als 1 Gew.-% auf.

Die nach dem erfindungsgemäßen Verfahren erhaltenen trockenen (Poly)harnstoffpulver weisen bevorzugt mittlere Partikelgrößen von weniger als 150 µm, bevorzugt weniger als 1 00 µm und noch bevorzugter von weniger als 80 µm auf. Die untere Grenze der mittleren Korn- bzw. Partikelgröße liegt bevorzugt bei mehr als etwa 20 µm. Korngrößen von mehr als 150 µm sind weniger bevorzugt, da diese ein homogenes Einarbeiten der (Poly)harnstoffpartikel in Grund- bzw. Basisöle erschwert. Mittlere Partikelgrößen von weniger als 20 µm sind weniger bevorzugt, weil sie einen zu großen Scheraufwand erfordern würden, andererseits das feinteilige Pulver dann zu starker Staubbildung neigt.

Die mittlere Korngröße meint hier das Gewichtsmittel der Partikelgröße, und sie wird bestimmt durch kohärente Lichtstreuung (Lasermethode), Diese Methode liefert eine mittlere Partikelgröße einschließlich der Agglomerate. Die Größe der Primärpartikel kann erheblich niedriger liegen, beispielsweise bei etwa 1 bis 10 µm. Durch die Anwendung von Hochdruckhomogenisatoren auf die erfindungsgemäß hergestellten PU-Fette kann eine weitgehende Deagglomerisation der erfindungsgemäß hergestellten Polyharnstoffpartikel erreicht werden.

Bevorzugt weisen mehr als 90 % der Partikel des erhaltenen (Poly)hornstoffpulvers eine Partikelgröße von weniger 100 µm auf.

Die vorliegende Erfindung betrifft weiterhin trockene (Poly)harnstoffpulver, die durch das erfindungsgemäße Verfahren erhältlich sind und insbesondere auch die getrockneten (Poly)harnstoffpulver, die einen mittleren Partikeldurchmesser von 20 bis 150 µm, bevorzugt von 20 bis 100 µm aufweisen und deren Lösungsmittelgehalt bevorzugt weniger als 0,5 Gew.-%, bevorzugter weniger als 0,3 Gew.-% noch bevorzugter weniger als 0,2 Gew.-% beträgt.

Der Vorteil der erfindungsgemäß hergestellten trockenen (Poly)harnstoffpulvern besteht insbesondere darin, erstmals eine Möglichkeit gefunden zu haben, Abnehmern die Herstellung von sogenannten PU-Fetten zu ermöglichen, ohne dass diese von dem unter dem Gesichtspunkt der Arbeitssicherheit problematischen "in-situ"-Verfahren Gebrauch machen müssen oder dass diese eine Hochdruckhomogenisierung bei hohen Drücken von mehr als 500 bar verwenden müssen. Es ist daher zu erwarten, dass die nach dem erfindungsgemäßen Verfahren erhältlichen (Poly)harnstoffpartikel Anwendungsgebiete bzw. Abnehmerkreise erschließen, für die man die Anwendung von (Poly)harnstoffen aufgrund der beschriebenen Nachteile bislang nicht in Erwägung zog.

Die nach dem erfindungsgemäßen Verfahren erhältlichen (Poly)harnstoffpulver sind insbesondere solche mit einer hohen spezifischen Oberfläche. Solche hohen spezifischen Oberflächen sind durch andere im Stand der Technik üblichen Trocknungsverfahren und anschließendem Vermahlen nicht erhältlich. Die erfindungsgemäßen (Poly)harnstoffpulver weisen eine spezifische Oberfläche von 15 bis 50 m²/g , bevorzugt von 35 bis 45 m²/g auf (gemessen durch Hg-Porosimetrie) auf.

Die vorliegende Erfindung betrifft weiterhin ein Verfahren zur Herstellung einer Zusammensetzung, die die vorstehend beschriebenen (Poly)harnstoffpulver suspendiert in mindestens einem Basisöl enthält,

Basisöle schließen dabei im Prinzip jede, vorzugsweise organische Flüssigkeit ein, die gegenüber dem (Poly)hornstoffpulver inert ist. Besonders handelt es sich um solche Flüssigkeiten, die sich mittels der (Poly)harnstoffpulver verdicken lassen.

Bevorzugte Basisöle sind beispielsweise übliche in Schmiermitteln eingesetzte Basisöle, wie übliche verwendete Mineralöle, synthetische Kohlenwasserstofföle oder synthetische oder natürliche Esteröle, oder Mischungen davon, Im allgemeinen weisen diese eine Viskosität im Bereich von etwa 4, bevorzugt 5 bis etwa 400 cSt bei 40°C auf, obwohl typische Anwendungen eine Viskosität im Bereich von etwa 10 bis ungefähr 200 cSt bei 40°C verlangen. Mineralöle, die erfindungsgemäß eingesetzt werden können, können konventionelle raffinierte Grundöle sein, die sich von paraffinischen, naphthenischen oder gemischten Rohölen ableiten. Synthetische Basisöle schließen Esteröle ein, wie Ester von Glycolen wie ein C13 Oxosäurediester von Tetroethylenglycol, oder komplexe Ester wie solche die aus 1 mol Sebacinsäure und 2 mol Tetraethylenglycol und 2 mol of 2-Ethylhexansäure gebildet werden.

Natürliche Esteröle schließen gesättigte und ungesättigte natürliche Esteröle, wie pflanzliche oder tierische Öle und Fette, bei denen es sich um die bekannten Triglyceride natürlich vorkommender Fettsäuren handelt, sowie deren hydrierte Produkte oder Umesterungsprodukte ein. Bevorzugte derartige natürliche Esteröle sind pflanzlicher Herkunft, insbesondere pflanzliche Öle, die im wesentlichen aus gemischten Glycerinestern höherer Fettsäuren mit gerader Anzahl von Kohlenstoffatomen bestehen, wie zum Beispiel Aprikosenkernöl, Avocadoöl, Baumwollöl, Borretschöl, Distelöl, Erdnussöl, gehärtetes Erdnussöl, Getreidekeimöl, Hanföl, Hoselnussöl, Kürbiskernöl, Kokosöl, Leinsamenöl, Lorbeeröl, Mohnöl, Macadamiaöl, Maisöl, Mandelöl, Nochtkerzenöl, Olivenöl, hydriertes Palmöl, Palmöl, Pistazienkernöl, Rapsöl, Rizinusöl, Sanddornöl, Sesamöl, Sojaöl, Sonnenblumenkernöl, Traubenkernöl, Wallnussöl, Weizenkeimöl, Wildrosenöl, Kokosfett, Palmfett, Palmkernfett oder Rüböl, Bevorzugt sind Sonnenblumenöl, Sojaöl und Rapsöl.

Andere synthetische Öle schließen ein: Synthetische Kohlenwasserstoffe wie Poly-alpha-olefine, Alkylbenzole, wie z.B Alkylatsümpfe aus der Alkylierung von Benzol mit Tetropropylen, oder die Copolymere von Ethylen und Propylen; Siliconöle, z.B. Ethylphenylpolysiloxane, Methylpolysiloxane, etc., Polyglycolöle, z.B. solche erhalten durch Kondensation von Butylalkohol mit Propylenoxid; Kohlensäureester, z.B. das Produkt der Umsetzung von C8 Oxoalkoholen mit Ethylcarbonat unter Bildung eines Halbesters, gefolgt von der Reaktion mit Tetroethyleneglycol, etc. Andere geeignete synthetische Öle schließen Polyphenylether ein, wie diejenigen, die ungefähr 3 bis 7 Etherbindungen und ungefähr 4 bis 8 Phenylgruppen aufweisen. Weitere Basisöle schließen perfluorierte Polyolkylether ein, wie die in der WO 97/477710 beschriebenen.

Die Basisöle weisen bevorzugt einen Siedepunkt von mehr als 1 00 °C, bevorzugter mehr als 150°C, noch bevorzugter mehr als 180 °C auf.

Bevorzugte Basisöle sind konventionelle raffinierte Grundöle, die sich von paraffinischen, naphthenischen oder gemischten Rohölen ableiten, synthetische Kohlenwasserstoffe wie Poly-alpha-olefine, Alkylbenzole und Esteröle.

Für Lebensmittelanwendungen besonders bevorzugte Basisöle sind die im US Gesetz "Code of Federal Regulations" CFR 21 §§ 170 - 199 dargelegten Basisöle, wie z.B. Weißöl gemäß § 172.878, isoparaffinische Kohlenwasserstoffe gemäß § 178.3530, Mineralöl gemäß § 178.3620, Polyethylenglykole gemäß § 178.3750, FettsäureMethyl-/Ethylester gemäß § 172.225.

Bevorzugt enthält die erfindungsgemäß hergestellte Zusammensetzung von 2 bis 25 Gew.-%, bevorzugt von 5 bis 15 Gew.-% des erfindungsgemäßen (Poly)harnstoffs bezogen auf die Gesamtmenge des Basisöls.

Das Verfahren zur Herstellung der o.g. Zusammensetzung umfasst zweckmäßig das Suspendieren des erfindungsgemäß hergestellten (Poly)harnstoffpulvers in mindestens einem Basisöl. Das Suspendieren des (Poly)harnstoffpulvers in dem Basisöl kann in an sich bekannter Weise erfolgen beispielsweise in einem Homogenisator, mittels Walzenstuhl oder Hochgeschwindigkeits-Dissolvern sowie weiteren für die Herstellung von solchen Dispersionen an sich bekannten Vorrichtungen, wie zum Beispiel Korundscheiben, Kolloidmühlen, Stiftmühlen etc.. Die Einarbeitung des Pulvers erfolgt durch Anteigen bei erhöhten Temperaturen von ca. 100 - 220°C, bevorzugt von ca. 1 20 bis 200°C und anschließendem ein- bis mehrfachem Homogenisieren in den o. g. Gerätschaften. Insbesondere hat sich das Einarbeiten bei erhöhten Temperaturen gegebenenfalls bis ca, 200°, anschließendes Abkühlen und mehrmaligem (zwei oder mehr) Homogenisieren als besonders bevorzugt erwiesen. Vor dem Homogenisieren erweist sich die Abkühlung der angeteigten Masse als zweckmäßig. Wie oben erwähnt, ist es bei Bedarf möglich, die erfindungsgemäß erhaltenen (Poly)harnstoffpartikel bei der Herstellung der PU-Fette durch alleinige oder zusätzliche Anwendung eines Hochdruckhomogenisators, wie einem sogenannten APV-Homogenisator, weiter zu deagglomerieren und dadurch die mittlere Partikelgrößen weiter zu erniedrigen bis in den Primärpartikelgrößenbereich.

Durch die Verwendung des erfindungsgemäßen besonders feinteiligen (Poly)harnstoffpulvers mit hoher spezifischer Oberfläche erfordert das Einarbeiten des Polyharnstoffpulvers wesentlich weniger Energie als die Einarbeitung eines mittels Vermahlen hergestellten (Poly)harnstoffpulvers. Außerdem werden zur Erzielung gleicher Viskositäten geringere Mengen des Polyharnstoffpulvers erforderlich.

Die vorliegende Erfindung betrifft weiterhin die Verwendung der erfindungsgemäß hergestellten (Poly)harnstoffpulver als Verdickungsmittel. Die erfindungsgemäßen (Poly)harnstoffpulver können beispielsweise als Verdickungsmittel in folgenden Anwendungen benutzt werden: Farben, Lacke, Klebstoffe, Pasten, Fette, Lösungen, Lebensmittelanwendungen bzw. Lebensmittelzusammensetzungen, etc.

Besonders bevorzugt werden die erfindungsgemäß hergestellten (Poly)harnstoffpulver als Verdickungsmittel in Schmiermitteln verwendet.

Die erfindungsgemäß hergestellten Polyharnstoffpulver werden dabei bevorzugt in Mengen von etwa 5 bis 25 Gew.-%, bezogen auf die Gesamtmenge des Basisöls verwendet.

Die vorliegende Erfindung betrifft weiterhin Schmiermittel, die die erfindungsgemäß hergestellten Polyharnstoffpulver, mindestens ein Basisöl sowie gegebenenfalls weitere für Schmiermittel übliche Hilfs- und Zusatzstoffe enthalten. Diese üblichen Hilfs- und Zusatzstoffe schließen beispielswiese ein: Korrosionsinhibitoren, Hochdruckadditive, Antioxidantien, Friction Modifier, Verschleißschutzadditive.

Eine Beschreibung der in Schmierfetten verwendeten Additive findet sich beispielweise in Boner, "Modern Lubricating Greases", 1976, Kapitel 5.

In einer besonderen Ausführungsform betrifft die Erfindung eine Zusammensetzung insbesondere zur Verwendung als Schmiermittel, die mindestens ein erfindungsgemäßes (Poly)harnstoffpulver, mindestens ein Basisöl sowie mindestens einen weiteren Verdicker bzw. Eindicker enthält. Typische weitere in Schmierfettformulierungen verwendete Verdickungsmittel bzw. Eindicker schließen insbesondere die Alkalimetallseifen, Tone, Polymere, Asbest, Ruß, Kieselgele und Aluminiumkomplexe ein.

Erfindungsgemäß bevorzugt sind die sogenannten Seifenfette. Dabei handelt es sich insbesondere um Metallsalze von insbesondere einwertigen, gegebenenfalls substituierten vorzugsweise höheren (>C8) Carbonsäuren, wobei auch Mischungen von Metallsalzen der Carbonsäuren verwendet werden können. Es sind dies insbesondere Metallsalze von Carbonsäuren mit Alkali- und Erdalkalimetallen, wie Natrium, Kalium, Lithium, Calcium, Magnesium, Barium oder Strontium aber auch mit anderen Metallen wie beispielsweise Aluminium und Zink. Lithium- und Calciumseifen sind am verbreitetsten, Einfache Seifenschmierfette sind aus den Alkalimetallsalzen langkettiger Fettsäuren (mindestens C8) gebildet, wobei Lithium-12-hydroxystearat, das Häufigste, aus 12-Hydroxystearinsäure, Lithlumhydroxidmonohydrat, und Mineralöl gebildet ist. Komplexe Seifenfette werden auch weitverbreitet eingesetzt und umfassen Metallsalze einer Mischung organischer Säuren. Ein typisches komplexes Seifenschmierfett, das heutzutage eingesetzt wird, ist ein komplexes Lithiumseifenschmierfett, das aus 12-Hydroxystearinsäure, Lithiumhydroxidmonohydrat, Azelainsäure und Mineralöl hergestellt ist. Die Lithiumseifen sind in vielen Patenten einschließlich US-A-3 758 407, US-A-3 791 973, US-A-3 929 651 und US-A-4 392 967 beschrieben, in denen auch Beispiele angegeben sind.

Das Gewichtsverhältnis Gewicht Seifenfette zu Gewicht Polyharnstoffe kann erfindungsgemäß von 100 : 1 bis 1 : 100 betragen. Die Attraktivität der erfindungsgemäß hergestellten (Poly)harnstoffpulver bei der Abmischung mit Seifenfetten besteht insbesondere darin, dass man anders als in den via in situ-Verfahren hergestellten PU-Fetten hier das isolierte trockene Polyharnstoff-Pulver in die Seifenfett-Formulierungen einfügen kann und deren Eigenschaften dort gezielt beeinflussen kann. Versuche zeigen, dass durch das Zumischen von 2 % Polyharnstoff-Fett zu Lithium-Seifenfetten überraschend eine Verringerung der Penetration und damit eine Verbesserung der Konsistenz des Fettes erreicht. Weiterhin wird der Tropfpunkt gegenüber dem reinen Lithium-Seifenfett erhöht.

Die vorliegende Erfindung wird durch die folgenden Beispiele veranschaulicht.

### BEISPIELE

### Polyharnstoff 1:

Zu einer Mischung von 44,58g Diethyltolylendiamin und 99,3g Kokosfettamin in 1350 g Petrolether werden unter ständigem Rühren 1 28,43g eines Methylen-4,4'-diphenyldiisocyanats mit einem NCO-Gehalt von 32,68% zugesetzt.
Das Lösemittel der entstehenden Suspension wird nach Beendigung der Reaktion unter Scherbeanspruchung entzogen, und das entstehende Pulver im angelegten Vakuum getrocknet.

Es wird eine 15%-ige Suspension des erhaltenen Pulvers in naphthenbasischem Mineralöl bei ca, 150°C 1h gerührt, abgekühlt und anschließend im Dreiwalzenstuhl 3x homogenisiert. Tropfpunkt und Konsistenz des erhaltenen Fetts werden ermittelt. Als Vergleich dient ein Fett, welches aus Polyharnstoffpulver identischer Zusammensetzung und gleichem Basisöl gefertigt wurde. Das zugrunde liegende Pulver des Referenzfettes wurde im Knetextruder hergestellt und anschließend konventionell vermahlen.

### Ergebnisse:

| | Tropfpunkt [DIN 51580] | Walkpenetration | | |
|---|---|---|---|---|
| | | Pᵤ | P_{w,60} | P_{w,60,000} |
| Polyharnstofffett, Reaktor (Erfindung) | 212°C | 204 | 200 | 204 |
| Referenzfett, Knetextruder | 210°C | 242 | 242 | 259 |

Die Konsistenz eines Fettes wird bestimmt, indem die Konuspenetration nach ISO 2137 an einer Probe Fett ermittelt wird.
Die Konuspenetration entspricht hierbei der Eindringtiefe eines zylindrischen Konus in die Fettprobe nach 5s, gemessen in 1/10mm, - je höher der Wert, desto größer die Eindringtiefe, desto geringer die Fettkonsistenz. Dabei unterscheidet man zwischen der Ruhepenetration Pu und der Walkpenetration Pw,60 bzw. Pw,60.000, Die Ruhepenetration wird am unbehandelten Fett ermittelt. Die Walkpenetration wird bestimmt, nachdem die Probe mit 60 Hüben (Pw,60) bzw. 60.000 Hüben (Pw,60,000) gewalkt wurde. Die Differenz beider Walkpenetrationen stellt ein in der Praxis bewährtes Maß für die Fettstabilität unter andauernder Belastung dar. Je geringer die Differenz ausfällt, desto beständiger ist die Fettprobe gegen Belastung,

### Polyharnstoff 2:

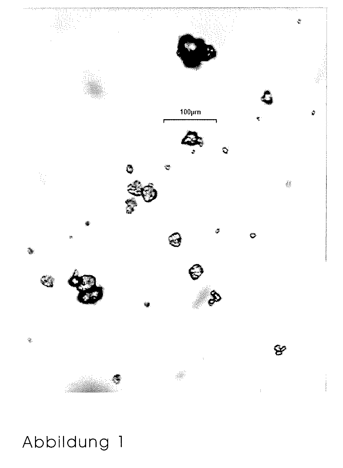

2 mol 2,4-,2,6-Tolylendiisocyanat wurden einer Mischung aus 1 mol 1,6-Hexamethylendiamin und 2 mol Stearylamin in Ethylacetat zugesetzt. Das Lösemittel der entstehenden Suspension wird nach Beendigung der Reaktion unter Scherbeanspruchung entzogen.
Der anfallende, pulverförmige Polyharnstoff 2 wird im Vakuum getrocknet. Die Lichtmikroskopische Aufnahme (Abbildung 1) zeigt, dass der Partikeldurchmesser deutlich unter 100µm liegt. Dies wird durch eine Partikelgrößenanalyse mittels kohärenter Lichtstreuung bestätigt. Das Gewichtsmittel der Messung liegt bei D[v, 0,5] = 30,79 µm.

Eine 15-%ige Suspension aus dem getrockneten Polyharnstoff 2 in naphthenbasischem ÖI wird bei 170°C 1 h gerührt, anschließend abgekühlt und im Dreiwalzenstuhl 3x homogenisiert, Es wurde die Konsistenz gegen ein "in-situ" hergestelltes Referenzfett identischer Zusammensetzung ermittelt.

### Ergebnis:

| | Walkpenetration | | |
|---|---|---|---|
| | Pᵤ | P_{w,60} | P_{w,60,000} |
| Polyharnstofffett, Reaktor (Erfindung) | 186 | 196 | 267 |
| Referenzfett, "in-situ"-Prozess | 195 | 200 | 298 |

Abmischungen von Lithiumseifenfetten mit erfindungsgemäß hergestelltem Polyharnstoffpulver.

Es sollte festgestellt werden, ob das Zumischen von erfindungsgemäß hergestelltem Polyhornstoffpulver zu einer Änderung von Penetration und Tropfpunkt kommerziell erhältlicher Lithiumseifenfette führt. Dazu wurden drei verschiedene kommerziell erhältliche Lithiumseifenfett mit und ohne Zusatz von Polyharnstoffpulver untersucht. Die Lithiumseifenfette wurden auf 1 70°C erwärmt eine Stunde temperiert und dann 3 x über einen Walzenstuhl mit und ohne Zusatz von Polyharnstoffpulver gegeben. Die Ergebnisse waren wie folgt:

| Versuch 1 | Pu(1/10 mmm) | Tropfpunkt (°C) |
|---|---|---|
| Li 12 OH Stear.-Grundfett P 1034 unbehandelt | 270 | 187 |
| Li 12 OH Stear.-Grundfett P 1034 1h 170°C; 3 x Walzenstuhl | 215 | 188 |
| Li 12 OH Stear.-Grundfett P 1034 + 2 % Polyharnstoffpulver 1h 170°C; 3 x Walzenstuhl | 196 | 203 |
| | | |

| Versuch 2 | Pu (1/10 mmm) | Tropfpunkt (°C) |
|---|---|---|
| Li Fett Shell L1 1257 unbehandelt | 235 | 184 |
| Li Fett Shell L1 1257 1 h 170°C; 3 x Walzenstuhl | 200 | 184 |
| Li Fett Shell L1 1257 2 % Polyharnstoffpulver 1 h 170°C; 3 x Walzenstuhl | 194 | 186 |
| | | |

| Versuch 3 | Pu (1/10 mmm) | Tropfpunkt (°C) |
|---|---|---|
| Texaco Li 12-OH-Fett L10195 unbehandelt | 238 | 197 |
| Texaco Li 12-OH-Fett L10195 1 h 1 70°C; 3 x Walzenstuhl | 206 | 198 |
| Texaco Li 12-OH-Fett L10195 + 2 % Polyharnstoffpulver 1 h 1 70°C; 3 x Walzenstuhl | 198 | 203 |

Die Versuche zeigen, dass durch das Zumischen von 2 % Polyharnstoff-Fett zu Lithium-Seifenfetten überraschend eine Verringerung der Penetration und damit eine Verbesserung der Konsistenz des Fettes erreicht. Weiterhin wird der Tropfpunkt gegenüber dem reinen Lithium-Seifenfett erhöht.

## Patentansprüche

1. Verfahren zur Herstellung eines (Poly)harnstoffpulvers, **dadurch gekennzeichnet, dass** man mindestens ein Isocyanat mit mindestens einem Amin in mindestens einem Lösungsmittel in einem Reaktor umsetzt und den entstandenen (Poly)harnstoff unter Scherbeanspruchung unter Bildung eines (Poly)harnstoffpulvers im genannten Reaktor trocknet.

2. Verfahren nach Anspruch 1, **dadurch gekennzeichnet, dass** der (Poly)hornstoff aus einer Monoharnstoff-Verbindung und einer Polyharnstoff-Verbindung ausgewählt wird.

3. Verfahren zur Herstellung eines Polyharnstoffpulvers nach Anspruch 1 oder 2, **dadurch gekennzeichnet, dass** man mindestens ein Polyisocyanat mit mindestens einem Polyamin sowie gegebenenfalls mit mindestens einem Monoamin in mindestens einem Lösungsmittel in einem Reaktor umsetzt und den entstandenen Polyharnstoff unter Scherbeanspruchung unter Bildung eines Polyharnstoffpulvers im genannten Reaktor trocknet.

4. Verfahren nach Anspruch 3, **dadurch gekennzeichnet, dass** das Gewichtsverhältnis des Gesamtgewichts von Polyisocyanat und Mono- bzw. Polyamin zum Gesamtgewicht der Lösungsmittel von 10% bis 50% beträgt.

5. Verfahren nach einem der Ansprüche 1 bis 4, **dadurch gekennzeichnet, dass** das Lösungsmittel aus organischen Lösungsmitteln ausgewählt wird.

6. Verfahren nach einem der Ansprüche 1 bis 5, **dadurch gekennzeichnet, dass** das Lösungsmittel aus organischen Lösungsmitteln ausgewählt wird, die aus der Gruppe ausgewählt werden, die besteht aus: Gegebenenfalls substituierten geradkettigen, verzweigten cyclischen aliphatischen oder aromatischen Kohlenwasserstoffen.

7. Verfahren nach einem der Ansprüche 3 bis 5, worin die Polyisocyanate aus der Gruppe ausgewählt werden, die besteht aus: 2,4'- und 4,4'-Diisocyanatodiphenylmethan (MDI) Hexamethylendiisocyanat (HDI), Toluoldiisocyanat (TDI), Polymethylenpolyphenylisocyanat (PMDI), Naphthylendiisocyanat (NDI), Dicyclohexyl-4,4'-diisocyanat und Isophorondiisocyanat (IPDI).

8. Verfahren nach einem der Ansprüche 1 bis 7, worin die Mono- bzw. Polyamine aus der Gruppe ausgewählt werden, die besteht aus: Ethylendiamin, 1,2-Propylendiamin, 1,3-Propylendiamin, Diethylentriamin, Triethylentetramin, Tetraethylenpentamin, Pentaethylenhexamin, Polyethylenimin mit Molgewichten zwischen 250 und 10.000, 2,4- Diaminotoluol und 2,6-Diaminotoluol, Bis-(4-amino-phenyl)-methan, Polymethylenpolyphenylamin und aminogruppenhaltige Polyether, mit einem Gehalt an primären oder sekundären Aminogruppen von 1 bis 8 mmol/g und Molgewichten zwischen 250 und 2000, Phenylendiamin, Diethyltoluylendiamin, 2-Methylpentamethylendiamin und Butylamin, Hexylamin, Oktylamin, Stearylamin, Oleylamin, Tridecylamin, Cocosfettamin, Anilin, Isopropylanilin, N,N-Diethylanilin, p-Toluidin, Cyclohexylamin, Dioctyldiphenylamin.

9. Verfahren nach einem der Ansprüche 1 bis 8, **dadurch gekennzeichnet, dass** neben Mono- bzw. Polyaminen weitere gegenüber Isocyanaten reaktive polyfunktionelle Verbindungen verwendet werden.

10. Verfahren nach einem der Ansprüche 1 bis 9 **dadurch gekennzeichnet, dass** das entstandene (Poly)harnstoffpulver aus Polyharnstoff mit einer massenmittleren Molekülmasse von 500 bis 20.000 bestimmt durch Gelpermeationschromatographie gegen Polystyrol als Standard, von 200 bis 2.000.000 besteht.

11. Verfahren nach einem der Ansprüche 1 bis 10, **dadurch gekennzeichnet, dass** die Umsetzung des Polyisocyanates mit dem Mono- bzw. Polyamin bei einer Temperatur im Bereich von 20 bis 120° C durchgeführt wird.

12. Verfahren nach einem der Ansprüche 1 bis 11, **dadurch gekennzeichnet, dass** das Trocknen bei einer Temperatur im Bereich von 40 bis 80 C° durchgeführt wird.

13. Verfahren nach einem der Ansprüche 1 bis 12, **dadurch gekennzeichnet, dass** das Trocknen bei einem Druck im Bereich von 100 bis 300 mbar durchgeführt wird.

14. Verfahren nach einem der Ansprüche 1 bis 13, **dadurch gekennzeichnet, dass** die Scherbeanspruchung von 1 bis 10⁴ S⁻¹ beträgt.

15. Verfahren nach einem der Ansprüche 1 bis 14, **dadurch gekennzeichnet, dass** der Reaktor aus horizontalen Einwellenmischern ausgewählt wird.

16. Verfahren nach einem der Ansprüche 1 bis 15, **dadurch gekennzeichnet, dass** das erhaltene (Poly)harnstoffpulver eine mittlere Partikelgröße von weniger 150 µm aufweist.

17. Verfahren nach Anspruch 1 bis 16, **dadurch gekennzeichnet, dass** das erhaltene (Poly)harnstoffpulver eine mittlere Partikelgröße von weniger 100 µm aufweist.

18. Verfahren nach Anspruch 16 oder 17, **dadurch gekennzeichnet, dass** das erhaltene (Poly)harnstoffpulver eine mittlere Partikelgröße von mehr als 20 µm aufweist.

19. Verfahren nach Anspruch 1 bis 18, worin mehr als 90 % der Partikel des erhaltenen (Poly)harnstoffpulvers eine Partikelgröße von weniger 100 µm aufweisen.

20. (Poly)harnstoffpulver, erhältlich nach Anspruch einem der Ansprüche 1 bis 19.

21. (Poly)harnstoffpulver, dass einen mittleren Partikeldurchmesser von 20 bis 100 µm aufweist.

22. (Poly)harnstoffpulver nach Anspruch 20 oder 21, das einen Gehalt an flüchtigen Bestandteilen, wie Lösungsmittel, von weniger als 0,5 Gew.-% aufweist.

23. (Poly)harnstoffpulver nach einem der Ansprüche 20 bis 22, dass eine spezifische Oberfläche von mehr als 15 m²/g (gemessen durch Hg-Porosimetrie) aufweist.

24. Verfahren zur Herstellung einer Zusammensetzung, dass das Suspendieren der (Poly)harnstoffpulver, erhalten nach einem der Ansprüche 1 bis 19 in mindestens einem Basisöl umfasst.

25. Verfahren nach Anspruch 24, worin man die Suspension des (Poly)harnstoffpulvers in mindestens einem Basisöl der Behandlung in einem Hochdruckhomogenisator unterwirft.

26. Verfahren nach Anspruch 25, **dadurch gekennzeichnet, dass** das Basisöl ausgewählt wird aus der Gruppe, die aus Mineralölen und synthetischen oder natürlichen Ölen besteht.

27. Verfahren nach Anspruch 24, 25 oder 26, worin die Menge des (Poly)harnstoffpulvers von 2 bis 25 Gew.-%, bezogen auf die Gesamtmenge des Basisöls beträgt,

28. Verfahren nach einem der Ansprüche 24 bis 27, worin mindestens ein weiterer für Schmiermittel üblicher Hilfs- und Zusatzstoff zugemischt wird.

29. Verfahren nach einem der Ansprüche 24 bis 28, worin mindestens ein weiterer Verdicker zugemischt wird.

30. Verwendung der (Poly)harnstoffpulver erhalten nach einem der Ansprüche 1 bis 19 als Verdickungsmittel.

31. Verwendung der (Poly)harnstoffpulver erhalten nach einem der Ansprüche 1 bis 19 in Schmiermitteln.

32. Verwendung der Zusammensetzung erhalten nach einem der Ansprüche 24 bis 29 als Schmiermittel, Farbe, Lack, Klebstoff, Paste, Lösung etc.
